# FASCICULE DE BREVET EUROPEEN

(11) **EP 2 875 678 B1**
(45) Date de publication et mention de la délivrance du brevet: **22.08.2018**
(21) Numéro de dépôt: 13744609.2
(22) Date de dépôt: 21.06.2013
(51) Int. Cl.: H04W 48/18, H04W 8/02, H04W 64/00

(54) **GESTION DE LA MOBILITE DANS UN RESEAU DE COMMUNICATION EN FONCTION DE LA VELOCITE D'UN TERMINAL MOBILE**
MOBILITÄTSMANAGEMENT IN EINEM KOMMUNIKATIONSNETZ VON DER GESCHWINDIGKEIT EINES MOBILEN ENDGERÄTS BASIS
MOBILITY MANAGEMENT IN A COMMUNICATION NETWORK BASED ON THE VELOCITY OF A MOBILE TERMINAL

(30) Priorité: 20.07.2012 FR 1257065
(43) Date de publication de la demande: 27.05.2015
(73) Titulaire: Orange, 75015 Paris (FR)
(72) Inventeur: EL MOUMOUHI, Sanaa, F-92120 Montrouge (FR); RADIER, Benoît, F-22700 Perros Guirec (FR)
(74) Mandataire: Regimbeau
(86) Numéro de dépôt international: PCT/FR2013/051460
(87) Numéro de publication internationale: WO 2014/013155

(56) Documents cités:
- WO-A1-2011/050835
- WO-A1-2011/147465
- MARIUS CORICI ET AL: "Enhanced access network discovery and selection in 3GPP Evolved Packet Core", LOCAL COMPUTER NETWORKS, 2009. LCN 2009. IEEE 34TH CONFERENCE ON, IEEE, PISCATAWAY, NJ, USA, 20 octobre 2009 (2009-10-20), pages 677-682, XP031581399, ISBN: 978-1-4244-4488-5

## Description

### DOMAINE TECHNIQUE GENERAL

L'invention concerne le domaine des communications cellulaires et concerne plus particulièrement la gestion de la mobilité entre des réseaux d'accès 3GPP et non 3GPP telle que spécifiée par le standard 3GPP dans les spécifications techniques TS 24.302 et TS 24.312.

### ETAT DE LA TECHNIQUE

Lorsqu'un utilisateur d'un terminal mobile de communication est abonné auprès d'un opérateur de télécommunication, cet opérateur de télécommunication permet à l'utilisateur de se connecter à un réseau de communication par l'intermédiaire de son terminal mobile, moyennant la souscription d'un abonnement afin d'accéder à plusieurs types de services provenant d'un réseau IP (en anglais, « *Internet Protocol* »), tel que le réseau Internet.

Lorsque ce réseau de communication est un réseau cellulaire 3GPP (par exemple, Edge, 3G, 3G+, 4G, LTE), il comporte notamment un coeur de réseau et un réseau d'accès 3GPP. Le réseau d'accès 3GPP comporte un ensemble de points d'accès 3GPP auprès desquels le terminal peut se connecter.

Outre le réseau d'accès 3GPP, l'opérateur peut mettre à disposition de ses abonnées des points d'accès non 3GPP (désignés par le terme de « *hot spot* ») pour augmenter la couverture et la capacité du réseau d'accès 3GPP.

Le terminal de communication peut ainsi effectuer une mobilité du réseau d'accès 3GPP vers le réseau d'accès non 3GPP, et vice versa.

Dans le standard 3GPP, notamment dans les spécifications techniques TS 24.302 et TS 24.312, il est prévu un serveur de découverte de points d'accès (en anglais « *Access Network Discovery and Selection Function* » (ANDSF)). En particulier, ce serveur ANDSF fournit, sur requête d'un terminal mobile, en cours de mobilité, une liste de points d'accès se trouvant à proximité de la position d'un terminal mobile. Les points d'accès sont relatifs à des réseaux d'accès non 3GPP (par exemple Wi-Fi, Wimax) et/ou 3GPP (par exemple Edge, 3G, 3G+, 4G, LTE). Un exemple se trouve dans WO 2011/050835. En outre, ce serveur ANDSF comporte une base de données comprenant des informations sur la topologie de réseaux d'accès et des informations sur des règles de sélection d'un réseau d'accès, notamment des règles d'un opérateur de télécommunication, ce qui permet d'ordonner la liste des types d'accès et des points accès que le terminal peut utiliser de préférence.

Pour recevoir la liste, le terminal transmet une requête au serveur ANDSF pour que, en cas de changement de position du terminal mobile ou en cas de dégradation de la qualité de la liaison radio, le terminal puisse récupérer la liste des points d'accès disponibles à proximité du terminal mobile.

Ainsi le terminal mobile stocke dans une mémoire une liste de points d'accès reçue du serveur ANDSF et peut décider d'effectuer une mobilité vers un des points d'accès de la liste, si nécessaire.

Cette liste de points d'accès se présente sous la forme d'une liste ordonnée de points d'accès à proximité du terminal mobile, éventuellement classée par types de réseau d'accès (3G, 4G, Wifi, Wimax).

La gestion de la mobilité actuellement déployée par le serveur ANDSF ne se fonde cependant que sur des préférences de l'opérateur ou de l'utilisateur. Or, en fonction du degré de mobilité et de vélocité du terminal mobile, certains points d'accès peuvent ne pas être adaptés à la qualité d'expérience nécessaire pour l'utilisateur.

### PRESENTATION DE L'INVENTION

L'invention permet de prendre en compte la mobilité du terminal mobile et propose, selon un premier aspect, un procédé de gestion de la mobilité d'un terminal mobile dans un réseau de communication comprenant une pluralité de points d'accès et un serveur de découverte de points d'accès adapté pour fournir au terminal mobile une liste des points d'accès du réseau auxquels le terminal mobile peut se connecter, le procédé comprenant les étapes suivantes : récupération, par le serveur de découverte de points d'accès, d'un vecteur vitesse du terminal mobile ; et génération, par le serveur de découverte de points d'accès, de la liste des points d'accès en fonction dudit vecteur vitesse.

Le procédé de l'invention est avantageusement complétée par les caractéristiques suivantes, prises seules ou en une quelconque de leur combinaison techniquement possible :
- le vecteur vitesse est récupéré auprès d'une passerelle de gestion de localisation et envoyé par ladite passerelle au serveur de découverte de points d'accès, suite à la réception, par la passerelle de gestion de localisation, d'une requête en récupération transmise par le serveur de découverte de points d'accès ;
- au moins une partie du vecteur vitesse est obtenue par la passerelle de gestion de localisation auprès d'un serveur de localisation apte à localiser le terminal mobile dans le réseau de communication ;
- le vecteur vitesse est déterminé par le terminal mobile au moyen d'un module de géolocalisation du terminal mobile et transmis par ledit terminal mobile au serveur de découverte de points d'accès ;
- le vecteur vitesse comprend une composante de vitesse du terminal mobile, le serveur de découverte de points d'accès générant la liste de points d'accès en fonction de ladite composante de vitesse du terminal mobile ;
- des seuils de vitesse maximale sont associés respectivement auxdits points d'accès en fonction de leur appartenance à une catégorie de points d'accès, les points d'accès associés à un seuil de vitesse maximale inférieur à la composante de vitesse du terminal mobile étant exclus de la liste générée par le serveur de découverte de points d'accès ;
- le vecteur vitesse comprend une composante d'accélération du terminal mobile, le serveur de découverte de points d'accès générant la liste de points d'accès en fonction de ladite composante d'accélération du terminal mobile ;
- le vecteur vitesse comprend une composante de déplacement, le serveur de découverte de points d'accès générant la liste de points d'accès en fonction de ladite composante de déplacement ;
- il comprend en outre l'envoi de la liste de points d'accès vers le terminal mobile et la mémorisation de ladite liste dans une mémoire du terminal mobile ;
- le serveur de découverte de points d'accès, respectivement la passerelle de gestion de localisation, est un serveur ANDSF, respectivement une passerelle GMLC, selon le standard 3GPP.

Selon un second aspect, l'invention concerne un serveur de découverte de points d'accès apte à transmettre à un terminal mobile une liste de points d'accès d'un réseau de communication auxquels le terminal mobile peut se connecter, ledit serveur étant configuré pour obtenir un vecteur vitesse du terminal mobile et générer la liste de points d'accès en fonction dudit vecteur vitesse.

Selon un troisième aspect, l'invention concerne une passerelle de localisation de mobile apte à déterminer un vecteur vitesse d'un terminal mobile et configurée pour, sur réception d'une requête en récupération du vecteur vitesse provenant d'un serveur de découverte de points d'accès, émettre un message comprenant le vecteur vitesse vers ledit serveur de découverte de points d'accès.

Selon un quatrième aspect, l'invention concerne une passerelle de localisation de mobile apte à déterminer un vecteur vitesse d'un terminal mobile et configurée pour, sur événement de changement de vélocité d'un terminal mobile émettre un message comprenant le vecteur vitesse vers ledit serveur de découverte de points d'accès.

Selon un cinquième aspect, l'invention concerne un terminal mobile comprenant un module de sélection d'un point d'accès d'un réseau de communication, ce module de sélection étant configuré pour sélectionner le point d'accès dans une liste de points d'accès reçue d'un serveur de découverte de points d'accès du réseau de communication, cette liste de points d'accès étant générée en fonction d'un vecteur vitesse du terminal mobile récupéré par le serveur de découverte de points d'accès.

Dans un mode de réalisation particulier, le terminal mobile comprend en outre un module de géolocalisation configuré pour déterminer le vecteur vitesse du terminal mobile et un module d'émission configuré pour transmettre ce vecteur vitesse au serveur de découverte de points d'accès.

Selon unsixième aspect, l'invention concerne un système de gestion de mobilité d'un terminal mobile comprenant un serveur de découverte de points d'accès, adapté pour fournir à un terminal mobile une liste de points d'accès d'un réseau de communication auxquels le terminal mobile peut se connecter, et une passerelle de localisation de mobile apte à déterminer un vecteur vitesse du terminal mobile. De manière avantageuse, la passerelle de localisation de mobile est configurée pour émettre un message comprenant le vecteur vitesse vers le serveur de découverte de points d'accès, suite à la réception d'une requête en récupération du vecteur vitesse provenant du serveur de découverte de points d'accès et le serveur de découverte de points d'accès est configuré pour générer la liste de points d'accès en fonction du vecteur vitesse reçu de la passerelle de localisation de mobile.

Selon un septième aspect, l'invention concerne un produit programme d'ordinateur comprenant des instructions de code pour l'exécution d'un procédé selon le premier aspect de l'invention, lorsque celui-ci est exécuté par un processeur.

En tenant compte de tout ou partie des paramètres de vélocité du terminal mobile lors de la préparation de la liste de points d'accès fournie au terminal mobile, la mobilité d'un terminal mobile d'un réseau d'accès vers un autre accès est optimisée.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un réseau de communication d'un opérateur ;
- la figure 2 illustre schématiquement le déploiement de points d'accès d'un réseau de communication d'un opérateur ;
- la figure 3 illustre un procédé de gestion de la mobilité d'un terminal mobile dans un réseau de communication conformément à un mode de réalisation de l'invention ; et
- les figures 4a et 4b illustrent un exemple d'application du procédé de gestion de mobilité selon la présente invention.

### DESCRIPTION DETAILLEE DE L'INVENTION

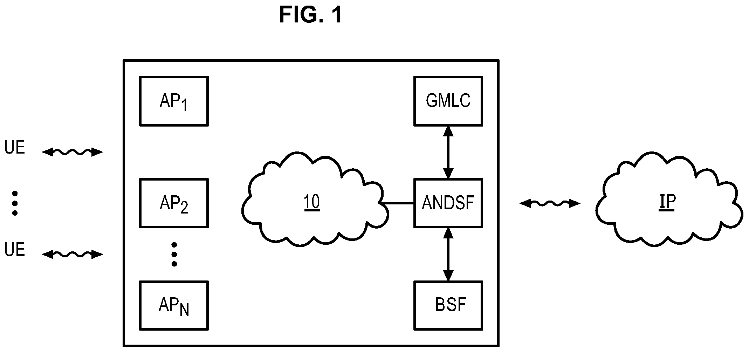

En relation avec la **figure 1**, un réseau de communication conforme à l'invention est illustré.

Le réseau comprend plusieurs points d'accès APi permettant d'accéder à des réseaux d'accès 10 et au moins un terminal mobile UE. Un réseau d'accès permet au terminal mobile UE de se connecter à un réseau IP (en anglais, « Internet Protocol ») du type Internet pour accéder à des services.

Un point d'accès APi (i=1, 2, 3) définit une zone de couverture Zi (i=1, 2, 3) dans laquelle est localisé le terminal mobile UE par rapport à un point d'accès. Ces points d'accès sont soit des points d'accès 3GPP, soit des points d'accès non 3GPP. Dans le cas d'un réseau d'accès 4G, les points d'accès sont des équipements appelés « eNodeB ». Dans le cas d'un réseau d'accès 3G, les points d'accès sont des équipements appelés « NodeB ». Dans le cas d'un réseau d'accès 2G ou GPRS, les points d'accès sont des stations de base « BTS » (en anglais, « *Base Transceiver Station* »). Dans le cas d'un réseau d'accès WiFi, les points d'accès sont des « *hotspots* ». Enfin, dans le cas d'un réseau d'accès WIMAX, les points d'accès sont des stations de base.

Le réseau comprend un serveur de découverte de points d'accès, désigné par ANDSF, qui permet de gérer une liste de points d'accès, une passerelle de gestion de localisation (en anglais, « *Gateway Mobile Location Center* », (GMLC)) et un serveur d'authentification mutuel (en anglais, « *Bootstrap Serving Function* », (BSF)).

Le serveur de découverte de point d'accès ANDSF peut être implémenté sous la forme d'un serveur dédié à cette seule fonctionnalité de découverte de points d'accès ou sous la forme d'un module logiciel installé dans un serveur ayant d'autres fonctions dans le réseau, notamment un serveur PCRF en charge d'appliquer certaines politiques de réseau et des règles de facturation.

Les terminologies ANDSF, GMLC et BSF sont reprises des standards 3GPP et sont utilisées par la suite, sans que l'invention ne se limite aux seules entités ainsi nommées dans ces standards, l'invention pouvant s'appliquer à tout réseau présentant des entités physiques ayant les mêmes fonctionnalités que ces entités.

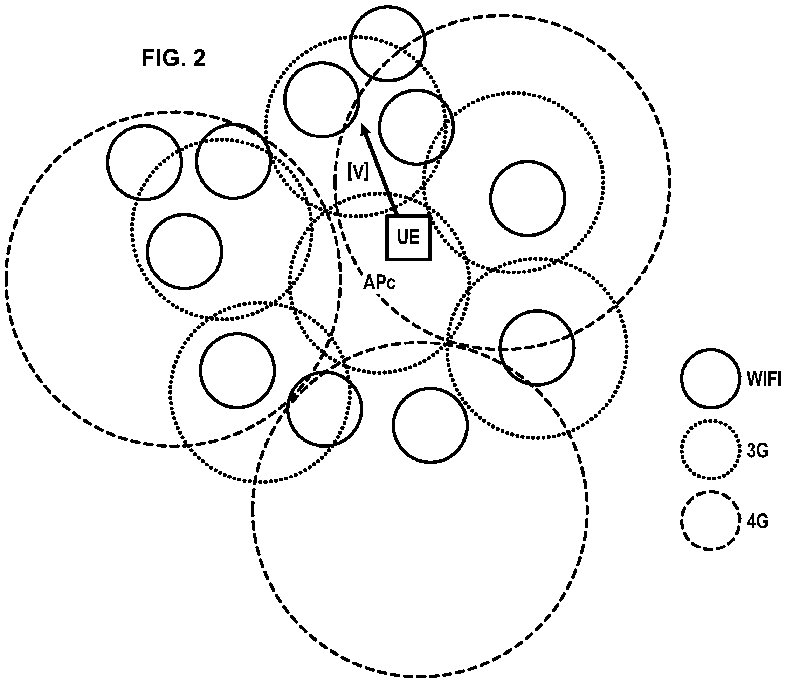

On se réfère maintenant à la **figure 2** qui illustre un terminal mobile UE connecté à un point d'accès courant (APc) d'un réseau de communication d'un opérateur, lequel comprend plusieurs réseaux d'accès comprenant chacun plusieurs points d'accès AP.

Chaque point d'accès AP définit une zone de couverture autour de ce point d'accès, illustrée par un cercle sur cette figure 2, dans laquelle doit se trouver le terminal mobile UE pour se connecter à ce point d'accès AP. Comme mentionné en relation avec la figure 1, ces points d'accès AP peuvent être de plusieurs types et notamment des points d'accès 3GPP, soit des points d'accès non 3GPP.

Le réseau représenté sur la figure 2 comprend trois types différents de points d'accès, à savoir des points d'accès WiFi, des stations « NodeB » pour la 3G et des stations « eNodeB » pour la 4G, dans un ordre croissant de taille de zone de couverture associée à ces points d'accès.

Le terminal mobile UE, connecté au point d'accès courant APc de type 3G, accède à un service d'un opérateur du réseau de communication. Ce service est disponible auprès d'un réseau d'accès 3GPP, mais peut aussi l'être auprès d'un réseau d'accès non 3GPP. Le point d'accès courant APc peut être un point d'accès à un réseau d'accès aussi bien non 3GPP que 3GPP.

Ce terminal mobile UE dispose dans ce réseau de plusieurs points d'accès AP à proximité de sa position. En particulier, le terminal mobile UE peut se trouver dans des zones de couverture de plusieurs points d'accès AP de plusieurs types. Ainsi, sur la figure 2, le terminal mobile UE se trouve aussi bien dans la zone de couverture du point d'accès courant APc de type 3G que dans la zone de couverture plus étendue d'un point d'accès de type 4G.

Lorsqu'il est en situation de mobilité, le terminal mobile UE se déplace selon une certaine direction, avec une certaine vitesse et une certaine accélération, formant un vecteur vitesse [V] et peut vouloir décider d'effectuer une mobilité du point d'accès courant APc à un autre point d'accès au moyen du procédé de gestion de mobilité décrit ci-après en utilisant certains, ou l'ensemble, de ces paramètres.

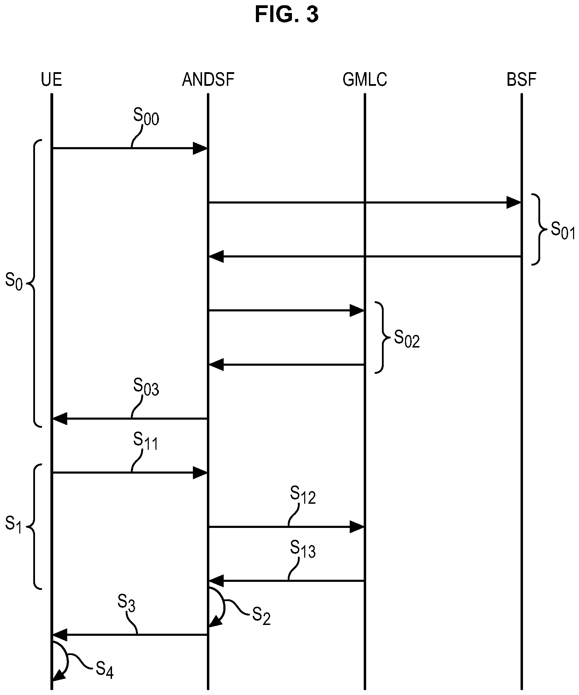

On se réfère maintenant à la **figure 3** qui illustre un procédé de gestion de mobilité d'un terminal mobile dans un réseau de communication conformément à un mode de réalisation de l'invention.

Ce procédé se fonde notamment sur l'emploi du vecteur vitesse [V] du terminal mobile UE afin de sélectionner, au niveau d'un serveur de découverte de points d'accès ANDSF, certains points d'accès parmi l'ensemble des points d'accès auxquels ce terminal mobile peut s'attacher.

Ce vecteur vitesse [V], désigné par « *velocity vector* » en anglais, est un vecteur comprenant notamment :
- une composante de vitesse du terminal mobile, pouvant être exprimée en m/s ;
- une composante d'accélération du terminal mobile, pouvant être exprimée en m/s² ;
- une composante de direction du terminal mobile, pouvant être exprimée par un angle dans un référentiel donné ;
- une composante de localisation du terminal mobile, pouvant être exprimée par des coordonnées (longitude, latitude).

Ce vecteur vitesse [V] peut être déterminé par le terminal mobile lui-même, au moyen d'un module de géolocalisation (par exemple de type GPS), ou au sein du réseau de communication, par l'intermédiaire d'une passerelle de gestion de localisation des mobiles, désignée par passerelle GMLC (pour « *Gateway Mobile Location Center* », en anglais).

Selon le standard 3GPP, cette passerelle GMLC est capable de transmettre au terminal mobile UE ou à une application, sur requête ou sur notification suite à une souscription, le vecteur vitesse du terminal mobile UE, ce qui est avantageux notamment pour les terminaux ne disposant pas de capteurs sophistiqués comme des capteurs GPS. Cette passerelle GMLC est ainsi adaptée pour localiser périodiquement le terminal mobile UE dans le réseau de communication ou pour prévenir une application quand le terminal UE se déplace.

La passerelle GMLC est typiquement connectée à un serveur de localisation (non représenté), désigné par serveur LCS (en anglais, « *LoCation Services* »)*.* Selon le standard 3GPP, le serveur LCS permet de retrouver la localisation géographique du terminal mobile UE dans le réseau de communication. L'information de localisation est ici plus précise que celle fournie par le terminal mobile UE quand il fonctionne sans module de géolocalisation GPS. De plus, cette information est garantie, car calculée par des équipements de confiance du réseau de communication.

Dans une étape S0, le terminal UE s'authentifie auprès du serveur de découverte de points d'accès ANDSF, par exemple en utilisant la procédure décrite dans la spécification technique TS 33.402 (« UE-ANDSF communication security ») permettant au serveur ANDSF de récupérer les informations de sécurité entre le terminal mobile UE et le serveur ANDSF, ainsi que des règles permettant de définir les accès qui pourront être utilisé par le terminal UE en fonction de son profil de souscription et de ses préférence (voir la spécification technique. TS 23.402, section 4.8.2.1).

Cette authentification comprend l'envoi (étape S00) au serveur ANDSF d'un identifiant du terminal mobile UE. Le serveur ANDSF vérifie auprès du serveur d'authentification mutuel BSF que l'utilisateur a le droit d'obtenir une liste de point d'accès en fonction de sa localisation, en lui en envoyant (étape S01) l'identifiant du terminal mobile UE.

Ce serveur BSF comprend une base de données comportant toutes les informations relatives aux utilisateurs abonnés du réseau ainsi que des paramètres de sécurité de l'utilisateur permettant à cet utilisateur abonné d'authentifier le serveur ANDSF et au serveur ANDSF d'authentifier le terminal UE et de sécuriser le lient entre ces deux entités. De telles informations sont récupérées au préalable auprès d'un serveur HSS (non représenté) lors d'une authentification générique préalable entre le terminal mobile UE et le serveur HSS via le serveur BSF (voir la spécification. TS 23.222). Le serveur BSF renvoie en réponse, au serveur ANDSF, des informations relatives à l'utilisateur, puis le serveur ANDSF envoie (étape S03) au terminal mobile UE l'information selon laquelle il est authentifié auprès du serveur ANDSF.

Outre l'authentification du terminal mobile UE, le serveur ANDSF peut également s'authentifier (étape S02) auprès de la passerelle GMLC lors de cette phase d'authentification.

Lors d'une première étape S1, le serveur de découverte de points d'accès ANDSF récupère le vecteur vitesse [V] du terminal mobile UE, soit auprès du terminal mobile UE lorsque ce dernier est capable de le déterminer, soit auprès de la passerelle GMLC lorsque celle-ci réalise la détermination de ce vecteur (ce dernier cas étant illustré sur la figure 3), cette dernière solution étant avantageuse car permettant de garantir le vecteur vitesse par l'intermédiaire du réseau de communication.

Cette étape S1 de récupération du vecteur vitesse [V] peut notamment être initiée par la réception, par le serveur de découverte de points d'accès ANDSF, d'une requête en récupération d'une liste de points d'accès auprès desquels le terminal mobile UE peut se connecter, émise (étape S11) par le terminal mobile UE.

Pour récupérer ce vecteur vitesse [V], le terminal mobile UE transmet (étape S11) une requête en récupération de ce vecteur vitesse vers la passerelle GMLC, cette requête comprenant un identifiant du terminal mobile afin de permettre à la passerelle GMLC de retrouver le vecteur vitesse de ce terminal mobile en particulier.

Suite à la réception de cette requête, la passerelle GMLC détermine ce vecteur vitesse éventuellement en contactant un serveur LCS afin d'obtenir des informations de localisation du terminal mobile UE, puis insère ce vecteur vitesse dans un message de réponse qu'il transmet (étape S12) en réponse au serveur de découverte de points d'accès ANDSF.

La requête en récupération du vecteur vitesse peut également prendre la forme d'une requête de souscription, auprès de la passerelle GMLC, afin que cette passerelle notifie le serveur ANDSF de toutes les modifications de localisation du terminal mobile UE, et notamment des déplacements de l'utilisateur d'un terminal mobile UE d'une zone (matérialisée par exemple par un identifiant de cellule CellId, ou par un identifiant de zone de routage RAI) à une autre.

Suite à la réception du vecteur de vitesse [V], le serveur de découverte de points d'accès ANDSF peut alors générer (étape S2) une liste des points d'accès du réseau de communication auxquels le terminal mobile UE peut se connecter, en fonction de ce vecteur vitesse, et notamment en utilisant une ou plusieurs des composantes de ce vecteur vitesse.

La liste générée par le serveur ANDSF peut consister en une liste ordonnée des points d'accès du réseau, avantageusement classée par type de points d'accès, dans laquelle les points d'accès sont rangés en fonction d'une ou plusieurs composantes du vecteur vitesse. Dans ce cas, les points d'accès apparaissant en premier sont prioritaires par rapport aux suivants, le terminal mobile UE cherchant d'abord à s'attacher au premier point d'accès de la liste, puis au deuxième point d'accès en cas d'échec d'attachement au premier point d'accès, et ainsi de suite. Alternativement, la liste générée par le serveur ANDSF peut ne contenir que certains des points d'accès sélectionnés en fonction d'une ou plusieurs composantes du vecteur vitesse.

Ainsi, dans un premier cas de figure, les points d'accès de la liste sont rangés dans cette liste en fonction de la composante de vitesse du terminal mobile, afin de proposer en priorité au terminal mobile en situation de mobilité les points d'accès qui sont compatibles avec sa vitesse de déplacement. Alternativement, la liste peut ne comprendre que des points d'accès sélectionnés en fonction de cette composante de vitesse, afin d'empêcher le terminal de chercher à se connecter à un point d'accès qui n'est pas compatible avec sa vitesse de déplacement.

Pour ce faire, des seuils de vitesse maximale sont associés respectivement aux points d'accès du réseau, en fonction de leur appartenance à une certaine catégorie de points d'accès. En d'autres termes, un premier seuil de vitesse maximale (par exemple 30 km/h) est associé aux points d'accès de type WiFi, un deuxième seuil de vitesse maximale (par exemple 50 km/h) est associé aux points d'accès de type Wimax, un troisième seuil de vitesse maximale (par exemple 100 km/h) est associé aux points d'accès de type 3G, etc., ces seuils de vitesse maximale représentant la vitesse maximale du terminal mobile compatible avec la catégorie du point d'accès en question.

Dans ce cas, les points d'accès associés à un seuil de vitesse maximale supérieur à la composante de vitesse du terminal mobile sont rangés prioritairement, dans la liste de points d'accès générée par le serveur de découverte de points d'accès ANDSF, par rapport aux points d'accès associés à un seuil de vitesse maximale inférieur à cette composante de vitesse. Alternativement, seuls les points d'accès associés à un seuil de vitesse maximale supérieur à la composante de vitesse du terminal mobile sont conservés dans la liste générée par le serveur ANDSF.

Ainsi, en reprenant les valeurs de seuil susmentionnées, si la valeur de la composante de vitesse du terminal mobile est de 80 km/h, les points d'accès Wifi et Wimax sont soit rangés avec la priorité la plus faible dans la liste de points d'accès générée par le serveur ANDSF par rapport aux points d'accès 3G,4G, soit exclus de cette liste par le serveur ANDSF qui ne garde alors que ces points d'accès 3G,4G. En d'autres termes, lorsque la vitesse du terminal mobile est élevée et que ce terminal mobile est connecté à un réseau d'accès 3GPP, on ne privilégie pas une mobilité vers un réseau d'accès non 3GPP, car ce type de réseaux d'accès ne supporte pas des vitesses élevées.

Dans un autre cas de figure, les points d'accès de la liste sont rangés dans cette liste en fonction de la composante d'accélération du terminal mobile, afin de proposer en priorité au terminal mobile en situation de mobilité des points d'accès compatibles avec l'accélération du terminal mobile. Alternativement, la liste peut ne comprendre que des points d'accès sélectionnés en fonction de cette composante d'accélération, afin d'empêcher le terminal de chercher à se connecter à un point d'accès qui n'est pas compatible avec son accélération.

A titre d'exemple, une accélération importante du terminal mobile est indicatrice d'un déplacement en véhicule motorisé de l'utilisateur du terminal mobile, pour lequel il est préférable de proposer en priorité des points d'accès 3G ou 4G par rapport à des points d'accès de type WiFi. L'application de ce critère d'accélération peut être similaire à l'application du critère de vitesse décrite ci-avant, en allouant des seuils d'accélération maximale en fonction de la catégorie de points d'accès et en comparant ces seuils avec la valeur de la composante d'accélération du vecteur vitesse afin de prioriser les points d'accès dans la liste.

Dans un autre cas de figure, les points d'accès de la liste sont rangés dans cette liste en fonction de la composante de déplacement du terminal mobile, afin de proposer en priorité au terminal mobile en situation de mobilité que des points d'accès qui se trouvent sur le trajet prévisible du terminal mobile. Alternativement, la liste peut ne comprendre que des points d'accès sélectionnés en fonction de cette composante de déplacement, afin d'empêcher le terminal de chercher à se connecter à un point d'accès qui n'est pas dans une zone géographique vers laquelle il se dirige. Ceci peut être fait en priorisant les points d'accès du réseau de communication situés dans une zone géographique comprise dans un secteur de plus ou moins N degrés (N pouvant être de l'ordre de 10°, par exemple) par rapport à la direction de déplacement, en prenant la position du terminal mobile comme point de référence, par rapport aux points d'accès situés en dehors d'un tel secteur.

Bien entendu, le procédé ne se limite pas à l'utilisation d'une seule des composantes du vecteur vitesse pour sélectionner les points d'accès, mais peut utiliser toute combinaison des différentes composantes de ce vecteur vitesse, afin de sélectionner ces points d'accès selon plusieurs critères cumulés comme il sera vu plus loin.

Une fois générée, la liste de points d'accès est alors transmise dans un message (étape S3) au terminal mobile UE, lequel met alors à jour (étape S4) la liste de points d'accès déjà stockée dans sa mémoire, en la remplaçant par la nouvelle liste fournie par le serveur ANDSF.

Ainsi, lorsque le terminal mobile se trouve en situation de mobile et cherche un nouveau point d'accès auquel se connecter, il peut alors choisir ce nouveau point d'accès dans la liste de points d'accès qu'il a mémorisée, cette liste étant alors optimisée pour tenir compte de la vélocité et/ou de la direction de déplacement du terminal mobile UE.

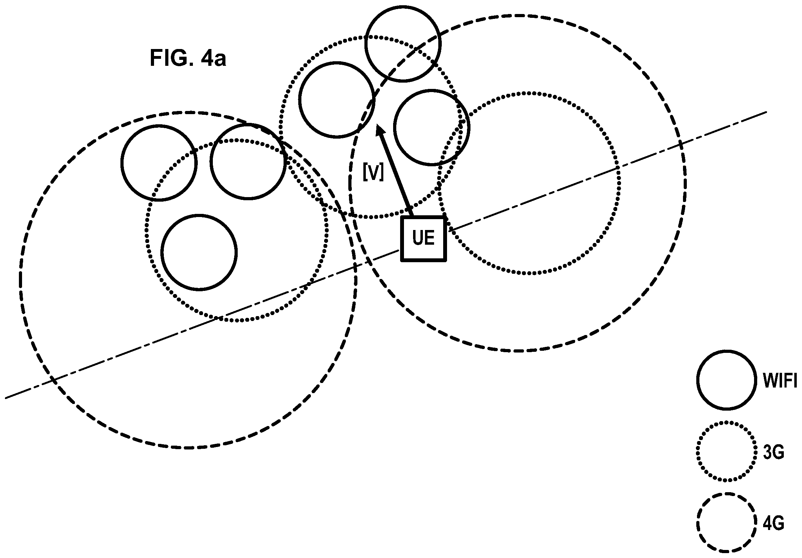

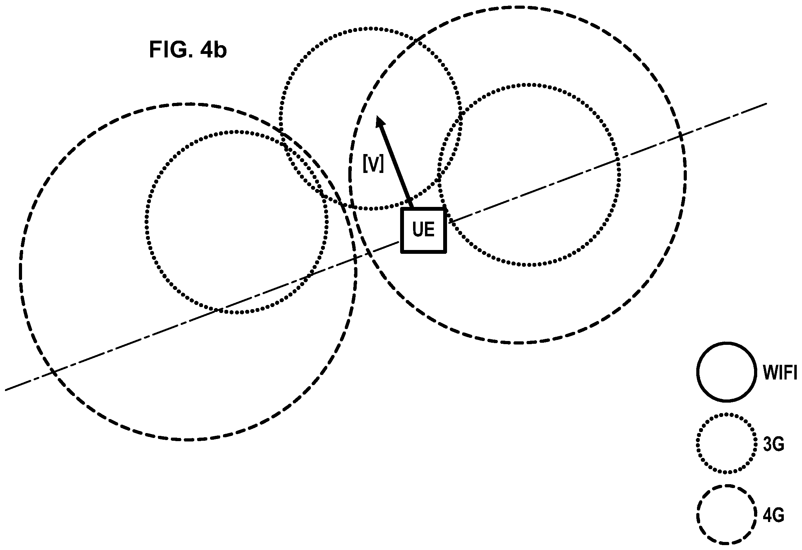

On se réfère maintenant aux **figures 4a** **et** **4b** qui illustrent un exemple d'application du procédé de gestion de mobilité selon la présente invention. Ces figures reprennent le réseau illustré en figure 2, dans lequel le terminal mobile UE se déplace avec un certain vecteur vitesse [V].

Dans un premier temps, on considère que le serveur ANDSF procède à une priorisation des points d'accès en fonction de la composante de déplacement du vecteur vitesse [V], en sélectionnant les points d'accès situés dans un secteur de [-90° ;+90°] par rapport à la direction de déplacement du terminal mobile UE, en prenant la position du terminal mobile UE comme origine. Les zones de couverture des points d'accès ainsi sélectionnés sont représentées sur la figure 4a.

Dans un deuxième temps, on considère que le serveur ANDSF procède à une priorisation supplémentaire des points d'accès en fonction d'une composante de vitesse du terminal mobile UE, ici de l'ordre de 80 km/h, ce qui exclut les points d'accès Wifi. Les zones de couverture des points d'accès sélectionnés avec cet autre critère, en plus du critère de déplacement, sont représentées sur la figure 4b.

La liste de points d'accès est alors ordonnée de sorte à ce que les points d'accès dont les zones de couvertures sont illustrées en figure 4b soit rangés prioritairement par rapport aux autres points d'accès apparaissant sur la figure 4a, eux-mêmes rangés prioritairement par rapport aux autres points d'accès apparaissant sur la figure 2. Cette liste est alors transmise par le serveur ANDSF au terminal mobile, qui peut choisir un nouveau point d'accès dans cette liste ordonnée, de manière optimisée car privilégiant l'attachement à des points d'accès situés dans la bonne direction et compatibles avec la vitesse du terminal mobile.

L'invention n'est pas limitée au procédé décrit ci-dessus mais concerne également un système de gestion de mobilité d'un terminal mobile comprenant un serveur de découverte de points d'accès ANDSF, adapté pour fournir à un terminal mobile UE une liste de points d'accès d'un réseau de communication auxquels le terminal mobile peut se connecter, et une passerelle de localisation de mobile GMLC apte à déterminer un vecteur vitesse du terminal mobile UE.

La passerelle de localisation de mobile GMLC est configurée pour émettre un message comprenant le vecteur vitesse vers le serveur de découverte de points d'accès ANDSF, suite à la réception d'une requête en récupération du vecteur vitesse provenant du serveur de découverte de points d'accès ANDSF.

Le serveur de découverte de points d'accès ANDSF est configuré pour générer la liste de points d'accès en fonction du vecteur vitesse reçu de la passerelle de localisation de mobile (GMLC).

Le terminal mobile UE, pour sa part, comprend un module de sélection configuré pour sélectionner un ou plusieurs points d'accès dans la liste de points d'accès reçue du serveur de découverte de points d'accès ANDSF, générée en fonction du vecteur vitesse de ce terminal mobile. Ce module de sélection peut prendre la forme d'un programme d'ordinateur exécuté par le processeur du terminal mobile UE. Dans un mode de réalisation où le terminal mobile UE fournit lui-même son vecteur vitesse, le terminal mobile comprend en outre un module de géolocalisation (e.g. un module GPS) configuré pour déterminer le vecteur vitesse du terminal mobile, lequel est envoyé vers le serveur de découverte de points d'accès ANDSF par un module d'émission (e.g. une interface de transmission de données couplée à une antenne) du terminal mobile UE.

En outre, l'invention concerne également un produit programme d'ordinateur comprenant des instructions de code pour l'exécution du procédé ci-dessus décrit, lorsque celui-ci est exécuté par un processeur.

## Revendications

1. Procédé de gestion de la mobilité d'un terminal mobile (UE) dans un réseau de communication comprenant une pluralité de points d'accès (AP, APc) et un serveur de découverte de points d'accès adapté pour fournir au terminal mobile (UE) une liste des points d'accès du réseau auxquels le terminal mobile peut se connecter, le procédé comprenant les étapes suivantes :
récupération (S1), par le serveur de découverte de points d'accès, d'un vecteur vitesse du terminal mobile (UE) ; et
génération (S2), par le serveur de découverte de points d'accès, de la liste des points d'accès en fonction dudit vecteur vitesse.

2. Procédé selon la revendication 1, dans lequel le vecteur vitesse est récupéré auprès d'une passerelle de gestion de localisation (GMLC) et envoyé (S13) par ladite passerelle au serveur de découverte de points d'accès, suite à la réception (S12), par la passerelle de gestion de localisation (GMLC), d'une requête en récupération transmise par le serveur de découverte de points d'accès.

3. Procédé selon la revendication 2, dans lequel au moins une partie du vecteur vitesse est obtenue par la passerelle de gestion de localisation (GMLC) auprès d'un serveur de localisation apte à localiser le terminal mobile (UE) dans le réseau de communication.

4. Procédé selon la revendication 1, dans lequel le vecteur vitesse est déterminé par le terminal mobile au moyen d'un module de géolocalisation du terminal mobile et transmis par ledit terminal mobile au serveur de découverte de points d'accès.

5. Procédé selon l'une des revendications 1 à 4, dans lequel le vecteur vitesse comprend une composante de vitesse du terminal mobile, le serveur de découverte de points d'accès générant la liste de points d'accès en fonction de ladite composante de vitesse du terminal mobile.

6. Procédé selon la revendication 5, dans lequel des seuils de vitesse maximale sont associés respectivement auxdits points d'accès en fonction de leur appartenance à une catégorie de points d'accès, les points d'accès associés à un seuil de vitesse maximale inférieur à la composante de vitesse du terminal mobile étant exclus de la liste générée par le serveur de découverte de points d'accès.

7. Procédé selon l'une des revendications 1 à 6, dans lequel le vecteur vitesse comprend une composante d'accélération du terminal mobile, le serveur de découverte de points d'accès générant la liste de points d'accès en fonction de ladite composante d'accélération du terminal mobile.

8. Procédé selon l'une des revendications 1 à 7, dans lequel le vecteur vitesse comprend une composante de déplacement, le serveur de découverte de points d'accès générant la liste de points d'accès en fonction de ladite composante de déplacement.

9. Procédé selon l'une des revendications 1 à 8, comprenant en outre l'envoi (S3) de la liste de points d'accès vers le terminal mobile (UE) et la mémorisation (S4) de ladite liste dans une mémoire du terminal mobile.

10. Procédé selon l'une des revendications 1 à 9, dans lequel le serveur de découverte de points d'accès, respectivement la passerelle de gestion de localisation, est un serveur ANDSF, respectivement une passerelle GMLC, selon le standard 3GPP.

11. Serveur de découverte de points d'accès apte à transmettre à un terminal mobile (UE) une liste de points d'accès d'un réseau de communication auxquels le terminal mobile peut se connecter, ledit serveur étant configuré pour obtenir un vecteur vitesse du terminal mobile et générer la liste de points d'accès en fonction dudit vecteur vitesse.

12. Passerelle de localisation de mobile (GMLC) apte à déterminer un vecteur vitesse d'un terminal mobile (UE) et configurée pour, sur réception d'une requête en récupération du vecteur vitesse provenant d'un serveur de découverte de points d'accès, émettre un message comprenant le vecteur vitesse vers ledit serveur de découverte de points d'accès.

13. Passerelle de localisation de mobile (GMLC) apte à déterminer un vecteur vitesse d'un terminal mobile (UE) et configurée pour, sur événement de changement de vélocité d'un terminal mobile émettre un message comprenant le vecteur vitesse vers ledit serveur de découverte de points d'accès.

14. Terminal mobile comprenant un module de sélection d'un point d'accès d'un réseau de communication, ledit module de sélection étant configuré pour sélectionner ledit point d'accès dans une liste de points d'accès reçue d'un serveur de découverte de points d'accès dudit réseau de communication, ladite liste de points d'accès étant générée en fonction d'un vecteur vitesse du terminal mobile récupéré par ledit serveur de découverte de points d'accès.

15. Terminal mobile selon la revendication 14, comprenant en outre un module de géolocalisation configuré pour déterminer le vecteur vitesse du terminal mobile et un module d'émission configuré pour transmettre ledit vecteur vitesse audit serveur de découverte de points d'accès.

16. Système de gestion de mobilité d'un terminal mobile comprenant un serveur de découverte de points d'accès, adapté pour fournir à un terminal mobile (UE) une liste de points d'accès d'un réseau de communication auxquels le terminal mobile peut se connecter, et une passerelle de localisation de mobile (GMLC) apte à déterminer un vecteur vitesse du terminal mobile (UE),
la passerelle de localisation de mobile (GMLC) étant configurée pour émettre un message comprenant le vecteur vitesse vers le serveur de découverte de points d'accès, suite à la réception d'une requête en récupération du vecteur vitesse provenant du serveur de découverte de points d'accès ;
le serveur de découverte de points d'accès étant configuré pour générer la liste de points d'accès en fonction du vecteur vitesse reçu de la passerelle de localisation de mobile (GMLC).

17. Produit programme d'ordinateur comprenant des instructions de code pour l'exécution d'un procédé selon l'une des revendications 1 à 10, lorsque celui-ci est exécuté par un processeur.

## Patentansprüche

1. Verfahren zum Mobilitätsmanagement eines mobilen Endgeräts (UE) in einem Kommunikationsnetz, umfassend eine Vielzahl von Zugangspunkten (AP, APc) und einen Server zur Erfassung von Zugangspunkten, der geeignet ist, an das mobile Endgerät (UE) eine Liste der Zugangspunkte des Netzes, an die sich der Server anschließen kann, zu liefern, wobei das Verfahren die folgenden Schritte umfasst:
durch den Server zur Erfassung von Zugangspunkten Gewinnung (S1) eines Geschwindigkeitsvektors des mobilen Endgeräts (UE); und
durch den Server zur Erfassung von Zugangspunkten Erstellung (S2) der Liste der Zugangspunkte in Abhängigkeit von dem Geschwindigkeitsvektor.

2. Verfahren nach Anspruch 1, bei dem der Geschwindigkeitsvektor bei einem Gateway zum Lokalisierungsmanagement (GMLC) wiederhergestellt und von dem Gateway an den Server zur Erfassung von Zugangspunkten gesandt wird (S13), nachdem von dem Gateway zum Lokalisierungsmanagement (GMLC) eine Gewinnungsanfrage, die von dem Server zur Erfassung von Zugangspunkten übertragen wurde, empfangen wurde (S12).

3. Verfahren nach Anspruch 2, bei dem mindestens ein Teil des Geschwindigkeitsvektors durch das Gateway zum Lokalisierungsmanagement (GMLC) bei einem Lokalisierungsserver erhalten wird, der geeignet ist, das mobile Endgerät (UE) in dem Kommunikationsnetz zu lokalisieren.

4. Verfahren nach Anspruch 1, bei dem der Geschwindigkeitsvektor von dem mobilen Endgerät mit Hilfe eines Geolokalisierungsmoduls des mobilen Endgeräts bestimmt und von dem mobilen Endgerät an den Server zur Erfassung von Zugangspunkten übertragen wird.

5. Verfahren nach einem der Ansprüche 1 bis 4, bei dem der Geschwindigkeitsvektor eine Geschwindigkeitskomponente des mobilen Endgeräts umfasst, wobei der Server zur Erfassung von Zugangspunkten die Liste von Zugangspunkten in Abhängigkeit von der Geschwindigkeitskomponente des mobilen Endgeräts erstellt.

6. Verfahren nach Anspruch 5, bei dem Maximalgeschwindigkeitsgrenzen jeweils den Zugangspunkten in Abhängigkeit von ihrer Zugehörigkeit zu einer Kategorie von Zugangspunkten zugeordnet werden, wobei die einer Maximalgeschwindigkeitsgrenze unter der Geschwindigkeitskomponente des mobilen Endgeräts zugeordneten Zugangspunkte aus der vom Server zur Erfassung von Zugangspunkten erstellten Liste ausgeschlossen sind.

7. Verfahren nach einem der Ansprüche 1 bis 6, bei dem der Geschwindigkeitsvektor eine Beschleunigungskomponente des mobilen Endgeräts umfasst, wobei der Server zur Erfassung von Zugangspunkten die Liste von Zugangspunkten in Abhängigkeit von der Beschleunigungskomponente des mobilen Endgeräts erstellt.

8. Verfahren nach einem der Ansprüche 1 bis 7, bei dem der Geschwindigkeitsvektor eine Bewegungskomponente umfasst, wobei der Server zur Erfassung von Zugangspunkten die Liste von Zugangspunkten in Abhängigkeit von der Bewegungskomponente erstellt.

9. Verfahren nach einem der Ansprüche 1 bis 8, ferner umfassend das Senden (S3) der Liste von Zugangspunkten zu dem mobilen Endgerät (UE) und die Speicherung (S4) der Liste in einem Speicher des mobilen Endgeräts.

10. Verfahren nach einem der Ansprüche 1 bis 9, bei dem der Server zur Erfassung von Zugangspunkten bzw. das Gateway zum Lokalisierungsmanagement ein ANDSF-Server bzw. ein GMLC-Gateway nach dem 3GPP-Standard ist.

11. Server zur Erfassung von Zugangspunkten, der geeignet ist, an ein mobiles Endgerät (UE) eine Liste von Zugangspunkten eines Kommunikationsnetzes, an die sich das mobile Endgerät anschließen kann, zu übertragen, wobei der Server konfiguriert ist, um einen Geschwindigkeitsvektor des mobilen Endgeräts zu erhalten und die Liste von Zugangspunkten in Abhängigkeit von dem Geschwindigkeitsvektor zu erstellen.

12. Mobillokalisierungsgateway (GMLC), das geeignet ist, einen Geschwindigkeitsvektor eines mobilen Endgeräts (UE) zu bestimmen, und konfiguriert ist, um bei Empfang einer Anfrage nach Gewinnung des Geschwindigkeitsvektors von einem Server zur Erfassung von Zugangspunkten eine Nachricht, umfassend den Geschwindigkeitsvektor, zu dem Server zur Erfassung von Zugangspunkten zu senden.

13. Mobillokalisierungsgateway (GMLC), das geeignet ist, einen Geschwindigkeitsvektor eines mobilen Endgeräts (UE) zu bestimmen, und konfiguriert ist, um bei Eintreten einer Geschwindigkeitsänderung eines mobilen Endgeräts eine Nachricht, umfassend den Geschwindigkeitsvektor, zu dem Server zur Erfassung von Zugangspunkten zu senden.

14. Mobiles Endgerät, umfassend ein Auswahlmodul eines Zugangspunktes eines Kommunikationsnetzes, wobei das Auswahlmodul konfiguriert ist, um den Zugangspunkt in einer Liste von Zugangspunkten, die von einem Server zur Erfassung von Zugangspunkten des Kommunikationsnetzes erhalten wird, auszuwählen, wobei die Liste von Zugangspunkten in Abhängigkeit von einem Geschwindigkeitsvektor des mobilen Endgeräts, der vom Server zur Erfassung von Zugangspunkten wiederhergestellt wird, erstellt wird.

15. Mobiles Endgerät nach Anspruch 14, ferner umfassend ein Geolokalisierungsmodul, das konfiguriert ist, um den Geschwindigkeitsvektor des mobilen Endgeräts zu bestimmen, und ein Sendemodul, das konfiguriert ist, um den Geschwindigkeitsvektor an den Server zur Erfassung von Zugangspunkten zu übertragen.

16. System zum Mobilitätsmanagement eines mobilen Endgeräts, umfassend einen Server zur Erfassung von Zugangspunkten, der geeignet ist, an ein mobiles Endgerät (UE) eine Liste von Zugangspunkten eines Kommunikationsnetzes, an die sich das mobile Endgerät anschließen kann, zu liefern, und ein Mobillokalisierungsgateway (GMLC), das geeignet ist, einen Geschwindigkeitsvektor des mobilen Endgeräts (UE) zu bestimmen,
wobei das Mobillokalisierungsgateway (GMLC) konfiguriert ist, um eine Nachricht, umfassend den Geschwindigkeitsvektor, zu dem Server zur Erfassung von Zugangspunkten nach dem Empfang einer Anfrage nach Gewinnung des Geschwindigkeitsvektors von dem Server zur Erfassung von Zugangspunkten zu senden;
wobei der Server zur Erfassung von Zugangspunkten konfiguriert ist, um die Liste von Zugangspunkten in Abhängigkeit von dem vom Mobillokalisierungsgateway (GMLC) empfangenen Geschwindigkeitsvektor zu erstellen.

17. Computerprogrammprodukt, umfassend Codebefehle für die Ausführung eines Verfahrens nach einem der Ansprüche 1 bis 10, wenn dieses von einem Prozessor ausgeführt wird.

## Claims

1. Method for managing the mobility of a mobile terminal (UE) in a communication network comprising a plurality of access points (AP, APc) and an access point discovery server adapted to supply to the mobile terminal (UE) a list of the access points of the network to which the mobile terminal can connect, the method comprising the following steps:
retrieval (S1), by the access point discovery server, of a speed vector of the mobile terminal (UE); and
generation (S2), by the access point discovery server, of the list of access points as a function of said speed vector.

2. Method according to Claim 1, in which the speed vector is recovered from a location management gateway (GMLC) and sent (S13) by said gateway to the access point discovery server, following the reception (S12), by the location management gateway (GMLC), of a retrieval request transmitted by the access point discovery server.

3. Method according to Claim 2, in which at least a part of the speed vector is obtained by the location management gateway (GMLC) from a location server capable of locating the mobile terminal (UE) in the communication network.

4. Method according to Claim 1, in which the speed vector is determined by the mobile terminal by means of a geolocation module of the mobile terminal and transmitted by said mobile terminal to the access point discovery server.

5. Method according to one of Claims 1 to 4, in which the speed vector comprises a speed component of the mobile terminal, the access point discovery server generating the list of access points as a function of said speed component of the mobile terminal.

6. Method according to Claim 5, in which maximum speed thresholds are associated respectively with said access points as a function of their inclusion in a category of access points, the access points associated with a maximum speed threshold lower than the speed component of the mobile terminal being excluded from the list generated by the access point discovery server.

7. Method according to one of Claims 1 to 6, in which the speed vector comprises an acceleration component of the mobile terminal, the access point discovery server generating the list of access points as a function of said acceleration component of the mobile terminal.

8. Method according to one of Claims 1 to 7, in which the speed vector comprises a movement component, the access point discovery server generating the list of access points as a function of said movement component.

9. Method according to one of Claims 1 to 8, further comprising the sending (S3) of the list of access points to the mobile terminal (UE) and the memorizing (S4) of said list in a memory of the mobile terminal.

10. Method according to one of Claims 1 to 9, in which the access point discovery server, respectively the location management gateway, is an ANDSF server, respectively a GMLC gateway, according to the 3GPP standard.

11. Access point discovery server capable of transmitting to a mobile terminal (UE) a list of access points of a communication network to which the mobile terminal can connect, said server being configured to obtain a speed vector of the mobile terminal and generate the list of access points as a function of said speed vector.

12. Mobile location gateway (GMLC) capable of determining a speed vector of a mobile terminal (UE) and configured to, on reception of a retrieval request for the speed vector originating from an access point discovery server, send a message comprising the speed vector to said access point discovery server.

13. Mobile location gateway (GMLC) capable of determining a speed vector of a mobile terminal (UE) and configured to, on an event of change of velocity of a mobile terminal, send a message comprising the speed vector to said access point discovery server.

14. Mobile terminal comprising a module for selecting an access point of a communication network, said selection module being configured to select said access point from a list of access points received from an access point discovery server of said communication network, said list of access points being generated as a function of a speed vector of the mobile terminal recovered by said access point discovery server.

15. Mobile terminal according to Claim 14, further comprising a geolocation module configured to determine the speed vector of the mobile terminal and a transmission module configured to transmit said speed vector to said access point discovery server.

16. System for managing mobility of a mobile terminal comprising an access point discovery server, adapted to supply to a mobile terminal (UE) a list of access points of a communication network to which the mobile terminal can connect, and a mobile location gateway (GMLC) capable of determining a speed vector of the mobile terminal (UE),
the mobile location gateway (GMLC) being configured to send a message comprising the speed vector to the access point discovery server, following the reception of a retrieval request for the speed vector originating from the access point discovery server;
the access point discovery server being configured to generate the list of access points as a function of the speed vector received from the mobile location gateway (GMLC).

17. Computer program product comprising code instructions for executing a method according to one of Claims 1 to 10, when the latter is run by a processor.
